# EUROPÄISCHE PATENTSCHRIFT

(11) **EP 3 828 431 B1**
(45) Veröffentlichungstag und Bekanntmachung des Hinweises auf die Patenterteilung: **08.06.2022**
(21) Anmeldenummer: 20202683.7
(22) Anmeldetag: 20.10.2020
(51) Int. Cl.: F16D 9/10, F16L 27/08

(54) **DREHDURCHFÜHRUNG**
ROTARY FEED-THROUGH
PASSAGE TOURNANT

(30) Priorität: 26.11.2019 DE 102019218288
(43) Veröffentlichungstag der Anmeldung: 02.06.2021
(73) Patentinhaber: Christian Maier GmbH & Co. KG Maschinenfabrik, 89520 Heidenheim (DE)
(72) Erfinder: Szam, Peter, 89547 Gerstetten (DE)
(74) Vertreter: Dr. Weitzel & Partner

(56) Entgegenhaltungen:
- EP-A1- 0 000 212
- EP-A1- 0 806 578
- EP-A1- 1 336 807
- CN-Y- 201 241 307
- US-A- 4 186 570

## Beschreibung

Die vorliegende Erfindung betrifft eine Drehdurchführung im Einzelnen gemäß dem Oberbegriff von Anspruch 1.

Drehdurchführungen zum abgedichteten Übergang eines Fluids zwischen einem stationären und einem rotierenden System sind aus dem Stand der Technik bekannt. Beispielsweise wird auf WO 2019/206480 A1 verwiesen. Diese umfassen einen Stator, beispielsweise in Form eines stationären Gehäuses, welcher einen oder mehrere Anschlüsse zum Einleiten oder Ausleiten des Fluids aufweist. Der Stator übergibt oder übernimmt das Fluid in oder aus einem drehbar gelagerter Rotor, wofür sich wenigstens ein Fluidkanal sowohl durch den Stator als auch durch den Rotor erstreckt, wobei die Schnittstelle im Fluidkanal zwischen dem Stator und dem Rotor gegenüber der Umgebung abgedichtet ist. Innerhalb des Rotors ist der Fluidkanal in der Regel in zwei drehstarr miteinander verbundene Abschnitte unterteilt, wobei ein Abschnitt Bestandteil der Drehdurchführung ist und der andere Abschnitt Teil einer mit dem Fluid zu versorgenden Maschine ist und durch einen Motor angetriebenen wird. Bei dem Teil der Maschine kann es sich zum Beispiel um eine durch ein Öl oder sonstiges Medium beheizte Walze handeln, beispielsweise um einen Kalander in der Papierverarbeitung, Textilindustrie, Folienherstellung oder in Laminieranlagen. Solche Maschinenteile weisen zumeist eine hohe Masse auf und können durch das daraus resultierende hohe Massenträgheitsmoment und aufgrund der üblicherweise hohen Drehzahl nicht schnell bis zum Stillstand abgebremst werden.

Im Falle eines Lagerschadens im Lager zwischen dem Rotor der Drehdurchführung und dem Stator der Drehdurchführung kann sich eine Blockade im Lager ergeben, sodass der Rotor und der Stator unbeabsichtigt drehfest aneinander gekoppelt werden. Bei einem hohen am Rotor anliegenden Massenträgheitsmoment kann der Rotor dabei den Stator mittreißen, wobei der oder die Fluidanschlüsse am Stator abgerissen werden, sodass das in dem entsprechenden Fluidanschluss geführte Fluid unkontrolliert in die Umgebung entweicht. Dies ist besonders dann gravierend, wenn es sich um ein umweltschädliches oder gesundheitsgefährdendes Fluid, beispielsweise das genannte heiße Medium, handelt. Aufgrund des hohen Massenträgheitsmoments ist es auch nicht möglich, den Rotor schlagartig abzubremsen, um das Mitreißen des Stators zu verhindern.

Eine weitere Drehdurchführung wird in EP 1 336 807 A1 und EP 0 806 578 A1 offenbart. US 4 186 570 A beschreibt eine Überlastkupplung mit einem Scherstift zum Koppeln von zwei Wellen. Zum weiteren Stand der Technik wird verwiesen auf EP 0 000 212 A1 und CN 201 241 307 Y, die jeweils Überlastkupplungen zeigen.

Der vorliegenden Erfindung liegt die Aufgabe zugrunde, eine Drehdurchführung anzugeben, welche auch im Fall einer Lagerblockade in der Drehdurchführung eine unkontrollierte Freisetzung des Fluids an die Umgebung vermeidet.

Die erfindungsgemäße Aufgabe wird durch eine Drehdurchführung mit den Merkmalen von Anspruch 1 gelöst. In den abhängigen Ansprüchen werden besonders vorteilhafte Ausgestaltungen der Erfindung angegeben.

Eine erfindungsgemäße Drehdurchführung dient der abgedichteten Übergabe von Fluid zwischen einem stationären und einem rotierenden System. Die Drehdurchführung umfasst einen Stator, beispielsweise in Form eines stationären Gehäuses, und einen um eine Drehachse rotierbaren Rotor, der im oder am Stator mittels wenigstens einem Lager gelagert ist. Das Lager ist beispielsweise als Wälzlager ausgeführt, umfassend eine oder mehrere Lagerreihen. Prinzipiell kann das Lager jedoch auch als Gleitlager ausgeführt sein.

Am Stator ist wenigstens ein Fluidanschluss vorgesehen. Insbesondere sind mehrere Fluidanschlüsse vorgesehen, beispielsweise zumindest ein Vorlauf und ein Rücklauf für ein mit der Drehdurchführung zu übergebendes Fluid. Bei dem Fluid kann es sich um eine Flüssigkeit oder auch um ein dampfförmiges oder gasförmiges Medium handeln, beispielsweise um ein Heizmedium für einen Kalander oder Prozessmedium für eine Prozessmaschine.

Wenigstens ein Fluidkanal oder eine Vielzahl von Fluidkanälen erstreckt sich abgedichtet gegenüber einer Umgebung durch den Stator und den Rotor. Über den wenigstens einen Fluidanschluss kann demnach Medium in den wenigstens einen Fluidkanal übergeben werden oder aus dem wenigstens einen Fluidkanal abgeführt werden.

Erfindungsgemäß umfasst der Rotor eine fluidführende Überlastkupplung, die zwei Kupplungshälften aufweist, die beim Anliegen eines Drehmoments unterhalb eines vorgegebenen Grenzdrehmoments drehstarr aneinander gekoppelt sind und die beim Anliegen eines Drehmoments, das gleich oder größer als das vorgegebene Grenzdrehmoment ist, voneinander entkoppelt sind. Die Überlastkupplung bildet dabei sowohl im gekoppelten als auch im entkoppelten Zustand abschnittsweise den Fluidkanal aus und dichtet diesen gegenüber der Umgebung ab. Die erfindungsgemäße Ausführung der Drehdurchführung sieht außerdem vor, dass die beiden Kupplungshälften der Überlastkupplung im entkoppelten Zustand relativ zueinander um die Drehachse verdrehbar gegeneinander gelagert sind.

Durch Vorsehen der Überlastkupplung im Rotor der Drehdurchführung kann bei einer Lagerblockade des Lagers in der Drehdurchführung ein sicherer Betrieb der Drehdurchführung durch eine durch die Überlastkupplung im entkoppelten Zustand gebildete Behelfslagerung aufrecht erhalten werden, bis der am Rotor angeschlossene Maschinenteil, beispielsweise der Kalander, bis zum Stillstand runtergefahren wurde. Der Stator kann aufgrund des Auslösens der Überlastkupplung nicht vom Rotor mitgerissen werden, und da die Abdichtung innerhalb der Überlastkupplung auch im entkoppelten Zustand der Überlastkupplung beibehalten wird, kann das Fluid nicht in die Umgebung entweichen.

Insbesondere können die beiden Kupplungshälften jeweils eine Nabe umfassen, die den Rotor in zwei koaxial zueinander angeordnete Rotorabschnitte aufteilen. Der dem stationären Gehäuse abgewandte Teil wird zum Beispiel angetrieben und schleppt den dem Gehäuse zugewandten Teil über die Überlastkupplung mit, wobei das Antriebsdrehmoment von einem Antrieb einer über die Drehdurchführung mit Fluid versorgten Maschine bereitgestellt werden kann. Des Weiteren sind die beiden Kupplungshälften, insbesondere die Naben, drehfest an je einem der Rotorabschnitte angeschlossen oder integral mit diesem ausgebildet. Eine drehfeste Verbindung zwischen Rotorabschnitt und Nabe kann beispielsweise durch eine Schraubverbindung realisiert werden.

Entsprechend einer vorteilhaften Weiterbildung der Erfindung können die beiden Kupplungshälften im gekoppelten Zustand durch ein zusätzliches Verbindungselement aneinander gekoppelt sein. Die Verbindung zwischen dem zusätzlichen Verbindungselement und den Kupplungshälften kann dabei als Formschluss und/oder Kraftschluss und/oder Stoffschluss realisiert sein, beispielsweise durch Verschweißen.

Eine vorteilhafte Weiterbildung der Erfindung sieht vor, dass das zusätzliche Verbindungselement beim Anliegen eines kritischen Grenzmoments die Kopplung zwischen den Kupplungshälften unterbricht. Dies kann durch die Zerstörung des zusätzlichen Verbindungselements, beispielsweise durch Abscheren, erfolgen.

Eine weitere vorteilhafte Ausgestaltung der Erfindung sieht ferner vor, dass das zusätzliche Verbindungselement eine Kompensationseinrichtung zum Kompensieren von Bewegungen in Axialrichtung, das heißt in Richtung der Drehachse, umfasst. Diese axialen Bewegungen können zum Beispiel von thermischen Dehnungen sowie von prozessbedingten Schwingungen hervorgerufen werden.

Gemäß einer weiteren vorteilhaften Ausgestaltung der Erfindung umfasst die Überlastkupplung wenigstens zwei oder wenigstens drei Schleifringe. Diese können beispielsweise aus Kohlegraphit, Grauguss oder einem anderen Gleitmaterial gefertigt sein, um gute Gleiteigenschaften aufzuweisen. Die Schleifringe gewährleisten im gekoppelten Zustand bevorzugt eine spielfreie Verbindung der Kupplungshälften und im entkoppelten Zustand stellen diese einen Lagerring eines Gleitlagers dar. Wenigstens ein Schleifring kann die Aufgabe eines Axiallagers übernehmen und wenigstens ein oder zwei Schleifringe bilden ein Radiallager. Hierdurch wird ein Durchhängen der Kupplungshälften, wenn diese fliegend gelagert sind, verhindert und Druckkräfte in Axialrichtung werden kompensiert.

Wenigstens ein Schleifring kann bevorzugt, insbesondere im entkoppelten Zustand der Überlastkupplung, zugleich einen Dichtring zur Abdichtung des Fluidkanals ausbilden.

Gemäß einer weiteren vorteilhaften Ausgestaltung der Erfindung kann die Drehdurchführung eine Drehmomenterfassungsvorrichtung umfassen. Ein Lagerschaden oder Lagerverschleiß führt zu einer unerwünschten erhöhten Drehmomentübertragung zwischen dem Rotor und dem Stator. Das vom Rotor an den Stator übertragene Moment kann von der Drehmomenterfassungsvorrichtung detektiert werden, wodurch ein Steuersignal zum Abschalten einer den Rotor in Umlauf versetzenden Antriebseinheit versendet werden kann, und zwar im günstigen Fall bereits bevor die Überlastkupplung ausgelöst wird.

Gemäß einer vorteilhaften Weiterbildung der Erfindung umfasst das die Kupplungshälften verbindende zusätzliche Verbindungselement zumindest einen Metallbalg und/oder eine Torsionshülse. Der Metallbalg und die Torsionshülse können einteilig oder separat zueinander ausgeführt sein und sind bevorzugt axial unmittelbar hintereinander angeordnet. Der Metallbalg kann durch seine Verformung ein axiales Spiel zwischen den Kupplungshälften ausgleichen und die Abdichtung des Fluidkanals gewährleisten. Die Torsionshülse umfasst bevorzugt eine Sollbruchstelle, die beim Erreichen des vorgegebenen Grenzdrehmoments zerstört wird, wodurch die beiden Kupplungshälften entkoppelt werden. Die Torsionshülse und insbesondere deren Sollbruchstelle können dabei so dimensioniert werden, dass eine Anpassung an ein gewünschtes Grenzdrehmoment von beliebiger Höhe ermöglicht wird.

Entsprechend einer vorteilhaften Ausgestaltung der Erfindung begrenzt/begrenzen der Metallbalg und/oder die Torsionshülse den Fluidkanal, sodass das Fluid unmittelbar durch den Metallbalg und/oder die Torsionshülse strömt.

Eine vorteilhafte Weiterbildung der Erfindung sieht vor, dass der Metallbalg und/oder die Torsionshülse gegen die Naben abgedichtet ist/sind. Beispielsweise, ist/sind die Torsionshülse und/oder der Metallbalg jeweils mit den Nabenhälften verschweißt. Der Metallbalg und/oder die Torsionshülse haben demnach eine Doppelfunktion: Zum einen dichten sie den Fluidkanal ab. Zum anderen übertragen sie das Drehmoment zwischen den Kupplungshälften.

Entsprechend einer alternativen Ausführungsform der Erfindung erfolgen die Abdichtung und die Drehmomentübertragung durch zwei unterschiedliche Bauteile. Beispielsweise erfolgt die Abdichtung über einen oder mehrere Dichtringe und die Drehmomentübertragung erfolgt durch wenigstens ein separates Bauteil. Zur Drehmomentübertragung sind beispielsweise ein oder mehrere Scherstifte vorgesehen, die in beide Kupplungshälften, insbesondere beide Naben, eingesteckt sind. Der oder die Scherstifte weisen bevorzugt ebenfalls eine Sollbruchstelle beziehungsweise einen solchen Querschnitt auf, dass das Anliegen eines Drehmoments, das gleich oder größer als das vorgegebene Grenzdrehmoment ist, zu einem Bruch oder Abscheren des oder der Scherstifte führt. Um eine axiale Beweglichkeit zwischen den Naben zu ermöglichen, kann der wenigstens eine Scherstift mit einem Spiel in wenigstens eine Nabe eingesetzt sein.

Eine vorteilhafte Weiterbildung der Erfindung sieht vor, dass der Fluidanschluss wenigstens einen Schlauch oder eine andere flexible Fluidleitung umfasst.

Weitere vorteilhafte Ausgestaltungen der erfindungsgemäßen Drehdurchführung ergeben sich aus den Ausführungsbeispielen, welche nachfolgend unter Bezugnahme auf die Figuren näher beschrieben werden.

Es zeigen:
- Figur 1: eine Draufsicht auf eine erfindungsgemäße Drehdurchführung mit einer erfindungsgemäßen fluidführenden Überlastkupplung;
- Figur 2: eine Schnittansicht durch die erfindungsgemäße Drehdurchführung mit der erfindungsgemäßen fluidführenden Überlastkupplung;
- Figur 3: eine Detailansicht einer erfindungsgemäßen Ausführung der Überlastkupplung, wobei ein Verbindungselement als Kombination aus Metallbalg und Torsionshülse ausgeführt ist;
- Figur 4: eine Detailansicht einer alternativen erfindungsgemäßen Ausführung der Überlastkupplung, wobei ein Verbindungselement als Scherstift ausgeführt ist.

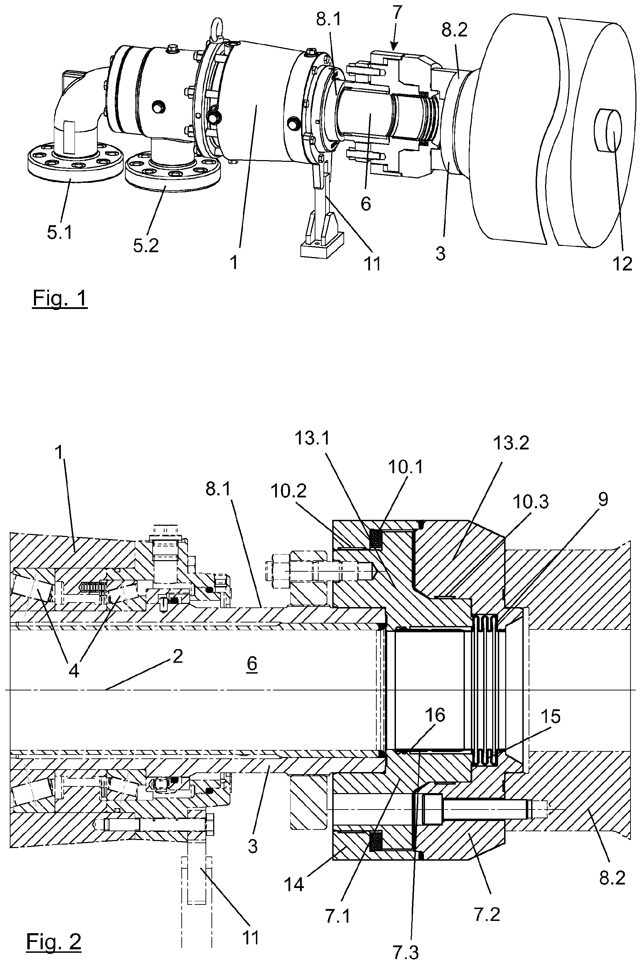

In Figur 1 ist eine Draufsicht auf eine erfindungsgemäße Drehdurchführung mit einer erfindungsgemäßen fluidführenden Überlastkupplung 7 dargestellt. Diese umfasst ein stationäres Gehäuse, als Stator 1 bezeichnet, und einen um eine Drehachse 2 drehbaren Rotor 3, der mittels wenigstens einem Lager 4 im Stator 1 gelagert ist, siehe hierzu die Figur 2. In Figur 2 sind mehrere Lager 4 dargestellt und als Wälzlager ausgeführt. Die Anzahl der Lager und die Lagerart sind jedoch nicht auf diese Ausführungsform beschränkt. Im gezeigten Ausführungsbeispiel wird der Rotor 3 vom Stator 1 umschlossen. Der Rotor 3 könnte jedoch auch den Stator 1 umschließen.

Die Überlastkupplung 7 teilt den Rotor 3 in die beiden Rotorabschnitte 8.1 und 8.2 auf. Eine Fluidzu- und -abfuhr erfolgt über die beiden Anschlüsse 5.1 und 5.2 am Stator 1, wobei die Drehdurchführung auch eine von zwei abweichende Anzahl an Fluidanschlüssen aufweisen kann. Das über die beiden Anschlüsse 5.1 und 5.2 zu- und abgeführte Fluid strömt durch wenigstens einen sich durch den Stator 1 und den Rotor 3 erstreckenden Fluidkanal 6, wobei insbesondere wenigstens zwei Fluidkanäle 6 im Stator 1 und Rotor 3 vorgesehen sind, um einen Vorlauf und einen Rücklauf zu bilden, wenn zwei separate Anschlüsse 5.1 und 5.2 am Stator 1 vorgesehen sind.

Ferner umfasst die Drehdurchführung eine Drehmomenterfassungsvorrichtung 11 und es ist eine Antriebseinheit 12 vorgesehen, mit welcher der Rotor 3 an dem, dem Stator 1 entgegengesetzten Rotorabschnitt 8.2 in Umlauf versetzt wird. Bei einem Schaden im Lager 4 kann es zu einer Übertragung eines vergleichsweise größeren Drehmomentes vom Rotor 3 auf den Stator 1 kommen. Dies wird im günstigen Fall durch die optional vorgesehene Drehmomenterfassungsvorrichtung 11 detektiert, wodurch in Abhängigkeit der Drehmomenterfassung ein Signal an die Antriebseinheit 12 übermittelt werden kann, um diese abzuschalten. Wenn jedoch eine plötzliche Blockade im Lager 4 auftritt, so kann die Zeit, die benötigt wird, um den Rotor 3 beziehungsweise die an diesem angeschlossene Welle einer Maschine, beispielsweise einen Kalander, herunterzufahren, nicht ausreichend sein, um Folgeschäden zu vermeiden. Für diesen Fall unterbricht die Überlastkupplung 7 den Antriebsleistungsfluss vom Rotorabschnitt 8.2 auf den Rotorabschnitt 8.1, und zwar aufgrund des dann an ihr anliegenden erhöhten Drehmoments, sobald das Drehmoment ein vorgegebenes Grenzdrehmoment erreicht. Die Überlastkupplung 7 stellt demnach eine rein mechanische Sicherheitseinrichtung dar.

In Figur 2 ist eine Schnittansicht der erfindungsgemäßen Drehdurchführung mit der erfindungsgemäßen fluidführenden Überlastkupplung 7 dargestellt. Die Überlastkupplung 7 umfasst zwei Kupplungshälften 7.1 und 7.2, die jeweils eine Nabe 13.1 und 13.2 aufweisen. Die Nabe 13.1 ist drehfest mit dem Rotorabschnitt 8.1 und die Nabe 13.2 ist drehfest mit dem Rotorabschnitt 8.2 verbunden, hier jeweils mittels einer Verschraubung. Die beiden Rotorabschnitte 8.1 und 8.2 sind mit Hilfe eines zusätzlichen Verbindungselementes 7.3 miteinander verbunden. Lässt sich der Rotor 3 im Schadensfall nicht schnell genug abbremsen, wird dieser durch die unterschiedliche Wirkrichtung des am Rotorabschnitt 8.1 angreifenden Bremsmoments und des am Rotorabschnitt 8.2 angreifenden Antriebsmoments tordiert. Übersteigt das resultierende Torsionsmoment ein festgelegtes Grenzdrehmoment, werden die beiden Rotorabschnitte 8.1 und 8.2 entkoppelt, wodurch der Rotorabschnitt 8.2 weiter frei umlaufen kann. Gleichzeitig gewährleistet die erfindungsgemäße Drehdurchführung, dass auch bei einem Auftrennen der Überlastkupplung 7 der Fluidkanal 6 gegenüber der Umgebung abgedichtet verbleibt.

Das Verbindungselement 7.3 kann zum Beispiel als Kombination eines Metallbalgs 15 und/oder einer Torsionshülse 16 oder als Scherstift 19 ausgeführt sein.

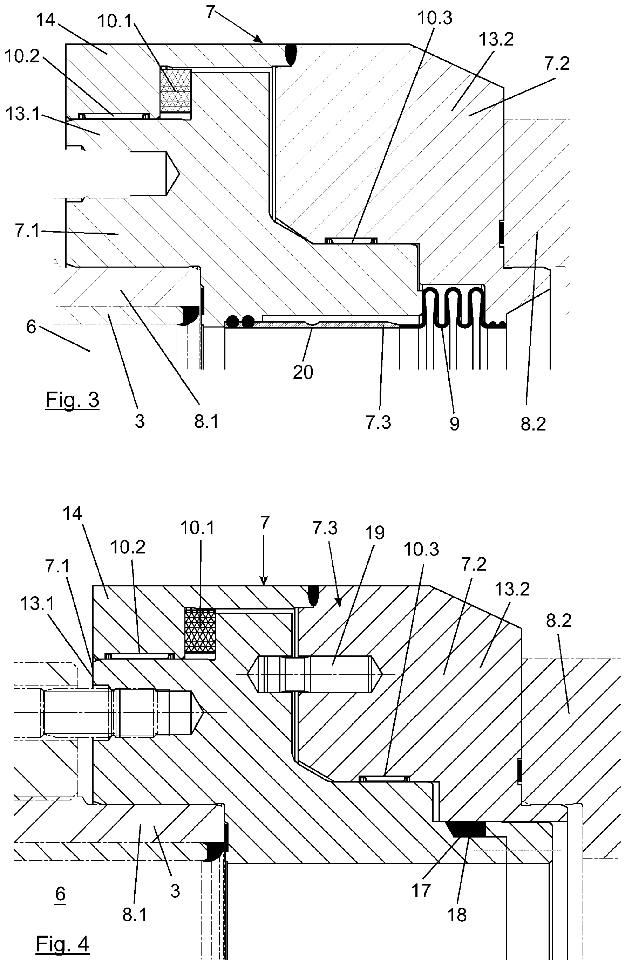

In der Figur 2 ist eine Ausführungsform mit einem Verbindungselement 7.3 gezeigt, das durch einen Metallbalg 15 und eine Torsionshülse 16 gebildet wird. Die Torsionshülse 16 weist eine Sollbruchstelle 20 auf, gebildet durch einen Längsabschnitt mit reduzierter Wandstärke, beispielsweise mit einer Kerbe, siehe hierzu auch die Figur 3.

Der Metallbalg 15 dient zur Kompensation thermischer Dehnungen sowie prozessbedingter Schwingungen in Axialrichtung. Er ist entsprechend in Richtung der Drehachse 2 mehr oder minder expandierbar und kompremierbar. Der Metallbalg 15 und die Torsionshülse 16 bilden einen Wandabschnitt des Fluidkanals 6. Wenn das Fluid im Fluidkanal 6 einen Überdruck aufweist, drückt es den Metallbalg 15 auseinander und damit auch die beiden Naben 13.1, 13.2 der Kupplungshälften 7.1, 7.2.

Zum entgegenwirkenden Abstützen der beiden Kupplungshälften 7.1, 7.2 in der Axialrichtung sind die beiden Kupplungshälften 7.1, 7.2 im gekoppelten Zustand durch einen Schleifring 10.1 kraftschlüssig miteinander verbunden. Dieser Schleifring 10.1 nimmt die durch die axiale Beweglichkeit des Metallbalgs 15 und den Betriebsdruck des Fluids auftretenden hydraulischen, axialen Kräfte auf.

Radiale Kräfte werden zwischen den beiden Kupplungshälften 7.1, 7.2 durch die zwischengeschalteten Schleifringe 10.2 und 10.3 übertragen. Diese wirken ferner spielausgleichend bezüglich von Radialspielen zwischen den beiden Naben 13.1, 13.2 und verhindern dadurch ein Durchhängen der Überlastkupplung 7.

Im entkoppelten Zustand der Überlastkupplung 7 bilden die Schleifringe 10.1, 10.2 und 10.3 Lagerringe von Gleitlagern, um die Drehbeweglichkeit zwischen den beiden Naben 13.1 und 13.2 zu ermöglichen und dabei den Fluidkanal 6 abgedichtet zu halten. Die Gleitlager übernehmen somit die Funktion eines behelfsmäßigen Lagers, bis der Rotorabschnitt 8.2 angehalten wird. Zugleich können die Schleifringe 10.1, 10.2, 10.3, zumindest der Schleifring 10.1 ein Dichtfunktion aufweisen, die ein Austritt von Fluid in die Umgebung zumindest weitgehend vermeidet.

Im gezeigten Ausführungsbeispiel ist am Grundkörper der Nabe 13.2 ein Deckel 14 angeschweißt, welcher zusammen mit der anderen Nabe 13.1 den ersten Schleifring 10.1 in der Axialrichtung, das heißt in Richtung der Drehachse 2, gemeinsam einschließt. Der Deckel 14 schließt ferner gemeinsam mit der Nabe 13.1 den zweiten Schleifring 10.2 in der Radialrichtung ein, wohingegen der dritte Schleifring 10.3 in der Radialrichtung unmittelbar zwischen der Nabe 13.1 und dem Grundkörper der Nabe 13.2 eingeschlossen wird.

Im gekoppelten Zustand der Überlastkupplung 7 erfolgt die Abdichtung des Fluidkanals 6 im gezeigten Ausführungsbeispiel zwischen der ersten Nabe 13.1 und der zweiten Nabe 13.2 nur über die Torsionshülse 16 und den Metallbalg15, die beide auch zur Drehmomentübertragung verwendet werden. Selbstverständlich könnten auch zusätzliche Abdichtungen vorgesehen sein.

Die Figur 3 zeigt eine Detailansicht der erfindungsgemäßen Ausführung der Überlastkupplung 7, wobei das Verbindungselement 7.3 als Kombination aus Metallbalg 15 und Torsionshülse 16 ausgeführt ist. Bezüglich der Einzelheiten wird auf die Beschreibung der Figur 2 verwiesen.

Die Figur 4 zeigt eine Detailansicht einer alternativen erfindungsgemäßen Ausführungsform der Überlastkupplung 7, wobei das Verbindungselement 7.3 als Scherstift 19 ausgeführt ist. Insbesondere sind zwei oder mehrere Scherstifte 19 über dem Umfang um die Drehachse 2 (siehe die Figur 2) verteilt angeordnet und wirken parallel. Eine Abdichtung zwischen den beiden Naben 13.1 und 13.2 wird durch eine separate Dichtung 17, insbesondere in Form eines Dichtringes oder einer Dichtpackung 18 erreicht. Diese Dichtung ist in Strömungsrichtung des Fluids im Spalt zwischen den beiden Naben 13.1 und 13.2 vor dem oder den Scherstiften 19 vorgesehen, könnte jedoch auch dahinter angeordnet sein.

Auch bei der Ausführungsform gemäß der Figur 4 wird die Überlastkupplung 7 bei Erreichen eines vorgegebenen Grenzdrehmoments ausgelöst, indem die Scherstifte 19 abscheren. Im abgescherten Zustand der Scherstifte 19 können sich die beiden Kupplungshälften 7.1 und 7.2 relativ zueinander um die Drehachse 2 (siehe die Figur 2) verdrehen. Bevorzugt bilden auch hier entsprechende Schleifringe 10.1, 10.2 und 10.3 entsprechende Gleitlager aus, die ein sicheres Herunterfahren des am zweiten Rotorabschnitt 8.2 angeschlossenen Bauteils ermöglichen, ohne dass die Gefahr des unkontrollierten Austritts von Fluid aus dem Fluidkanal 6 besteht.

### Bezugszeichenliste

- 1: Stator
- 2: Drehachse
- 3: Rotor
- 4: Lager
- 5.1,5.2: Fluidanschluss
- 6: Fluidkanal
- 7: Überlastkupplung
- 7.1,7.2: Kupplungshälfte
- 7.3: Verbindungselement
- 8.1,8.2: Rotorabschnitt
- 9: Kompensationseinrichtung
- 10.1: erster Schleifring
- 10.2: zweiter Schleifring
- 10.3: dritter Schleifring
- 11: Drehmomenterfassungsvorrichtung
- 12: Antriebseinheit
- 13.1, 13.2: Nabe
- 14: Deckel
- 15: Metallbalg
- 16: Torsionshülse
- 17: Dichtung
- 18: Dichtpackung
- 19: Scherstift
- 20: Sollbruchstelle

## Patentansprüche

1. Drehdurchführung mit einem Stator (1) und einem um eine Drehachse (2) rotierbaren Rotor (3), der im oder am Stator (1) mittels wenigstens einem Lager (4) im Betrieb der Drehdurchführung umlaufend um die Drehachse (2) gelagert ist; wobei
1.1 zumindest am Stator (1) wenigstens ein Fluidanschluss (5.1, 5.2) vorgesehen ist und sich wenigstens ein Fluidkanal (6) abgedichtet gegenüber einer Umgebung durch den Stator (1) und den Rotor (3) erstreckt;
**dadurch gekennzeichnet, dass**
1.2 im Rotor (3) eine fluidführende Überlastkupplung (7) vorgesehen ist, die zwei Kupplungshälften (7.1) und (7.2) umfasst, die bei Anliegen eines Drehmoments unterhalb eines vorgegebenen Grenzdrehmoments drehstarr aneinander gekoppelt sind und beim Anliegen eines Drehmoments, das gleich oder größer als das vorgegebene Grenzdrehmoment ist, voneinander entkoppelt sind, wobei die Überlastkupplung (7) im gekoppelten und entkoppelten Zustand der Kupplungshälften (7.1, 7.2) den Fluidkanal (6) gegenüber der Umgebung abgedichtet, abschnittsweise ausbildet und im entkoppelten Zustand die beiden Kupplungshälften (7.1, 7.2) relativ zueinander um die Drehachse (2) verdrehbar gegeneinander gelagert sind.

2. Drehdurchführung nach Anspruch 1, **dadurch gekennzeichnet, dass** die Kupplungshälften (7.1, 7.2) jeweils eine Nabe (13.1, 13.2) umfassen und den Rotor (3) in zwei koaxial zueinander angeordnete Rotorabschnitte (8.1, 8.2) aufteilen und jeweils eine Kupplungshälfte (7.1, 7.2) drehfest an einem der Rotorabschnitte (8.1, 8.2) angeschlossen ist.

3. Drehdurchführung nach Anspruch 2, **dadurch gekennzeichnet, dass** die beiden Kupplungshälften (7.1, 7.2) im gekoppelten Zustand durch ein Verbindungselement (7.3) aneinander gekoppelt sind, wobei das Verbindungselement (7.3) eine formschlüssig und/oder kraftschlüssig und/oder stoffschlüssig Verbindung zu jeweils beiden Kupplungshälften (7.1, 7.2) aufweist.

4. Drehdurchführung nach Anspruch 3, **dadurch gekennzeichnet, dass** das Verbindungselement (7.3) eingerichtet ist beim Anliegen des Grenzmoments die Kopplung zwischen den Kupplungshälften (7.1, 7.2) zu unterbrechen, insbesondere durch Abscheren.

5. Drehdurchführung nach Anspruch 3 oder 4, **dadurch gekennzeichnet, dass** das Verbindungselement (7.3) eine Kompensationseinrichtung (9) zum Kompensieren von Bewegungen in Richtung der Drehachse (2) umfasst.

6. Drehdurchführung nach einem der Ansprüche 1 bis 5, **dadurch gekennzeichnet, dass** die Überlastkupplung (7) wenigstens zwei Schleifringe (10.1, 10.2, 10.3) umfasst, die im gekoppelten Zustand insbesondere eine spielfreie Verbindung der Kupplungshälften (7.1, 7.2) herstellen, wobei ein Schleifring (10.1) Kräfte in Richtung der Drehachse (2) aufnimmt und wenigstens ein Schleifring (10.2, 10.3) Kräfte in Radialrichtung zur Drehachse (2) aufnimmt, und wobei die Schleifringe (10.1, 10.2, 10.3) im entkoppelten Zustand jeweils einen Lagerring eines Gleitlagers bilden.

7. Drehdurchführung nach einem der Ansprüche 1 bis 6, **dadurch gekennzeichnet, dass** eine Drehmomenterfassungsvorrichtung (11) insbesondere am Stator (1) angeschlossen ist, die eingerichtet ist, ein Anliegen des Drehmoments zu erfassen und ein Steuersignal zum Abschalten einer den Rotor (3) antreibenden Antriebseinheit (12) zu versenden.

8. Drehdurchführung nach einem der Ansprüche 3 bis 7, **dadurch gekennzeichnet, dass** das Verbindungselement (7.3) zumindest einen Metallbalg (15) und/oder eine Torsionshülse (16) umfasst.

9. Drehdurchführung nach Anspruch 8, **dadurch gekennzeichnet, dass** der Metallbalg (15) und/oder die Torsionshülse (16) den Fluidkanal (6) begrenzt/begrenzen.

10. Drehdurchführung nach Anspruch 8 und 9, **dadurch gekennzeichnet, dass** der Metallbalg (15) und/oder die Torsionshülse (16) gegen die Naben (13.1, 13.2) abgedichtet ist/sind.

11. Drehdurchführung nach einem der Ansprüche 3 bis 7, **dadurch gekennzeichnet, dass** das Verbindungselement (7.3) zumindest einen Scherstift (19) umfasst.

12. Drehdurchführung nach einem der Ansprüche 3 bis 11, **dadurch gekennzeichnet, dass** die beiden Naben (13.1, 13.2) mittels wenigstens einer getrennt von dem Verbindungelement (7.3) vorgesehenen Dichtung gegeneinander abgedichtet sind.

13. Drehdurchführung nach einem der Ansprüche 1 bis 12, **dadurch gekennzeichnet, dass** das wenigstens eine Lager (4) als Wälzlager ausgebildet ist.

14. Drehdurchführung nach einem der Ansprüche 1 bis 13, **dadurch gekennzeichnet, dass** der Fluidanschluss (5.1, 5.2) wenigstens einen Schlauch oder eine andere flexible Fluidleitung umfasst.

## Claims

1. Rotary feedthrough having a stator (1) and a rotor (3) which is rotatable about an axis of rotation (2) and which is mounted in or on the stator (1) by means of at least one bearing (4) so as to rotate about the axis of rotation (2) during operation of the rotary feedthrough; wherein
1.1 at least one fluid connection (5.1, 5.2) is provided at least on the stator (1) and at least one fluid channel (6) extends through the stator (1) and the rotor (3) in a sealed manner with respect to an environment;
**characterized in that**
1.2 a fluid-conducting overload coupling (7) is provided in the rotor (3), which coupling (7) comprises two coupling halves (7.1) and (7.2), which are coupled to one another in a torsionally rigid manner when a torque below a predetermined limit torque is applied and are decoupled from one another when a torque equal to or greater than the predetermined limit torque is applied, wherein the overload coupling (7), in the coupled and decoupled state of the coupling halves (7.1, 7.2), seals the fluid channel (6) with respect to the environment, forms a section and in the decoupled state the two coupling halves (7.1, 7.2) are mounted so as to be rotatable relative to one another about the axis of rotation (2).

2. Rotary feedthrough according to claim 1, **characterized in that** the coupling halves (7.1, 7.2) each comprise a hub (13.1, 13.2) and divide the rotor (3) into two rotor sections (8.1, 8.2) arranged coaxially to each other, and one coupling half (7.1, 7.2) each is connected in a rotationally fixed manner to one of the rotor sections (8.1, 8.2).

3. Rotary feedthrough according to claim 2, **characterized in that** the two coupling halves (7.1, 7.2) are coupled to one another in the coupled state by a connecting element (7.3), wherein the connecting element (7.3) has a positive and/or frictional and/or materially bonded connection to both coupling halves (7.1, 7.2) in each case.

4. Rotary feedthrough according to claim 3, **characterized in that** the connecting element (7.3) is arranged to interrupt the coupling between the coupling halves (7.1, 7.2) when the limit torque is applied, in particular by shearing.

5. Rotary feedthrough according to claim 3 or 4, **characterized in that** the connecting element (7.3) comprises a compensation device (9) for compensating for movements in the direction of the axis of rotation (2).

6. Rotary feedthrough according to one of claims 1 to 5, **characterized in that** the overload coupling (7) comprises at least two slip rings (10.1, 10.2, 10.3) which, in the coupled state, produce in particular a play-free connection of the coupling halves (7.1, 7.2), wherein one slip ring (10.1) absorbs forces in the direction of the axis of rotation (2) and at least one slip ring (10.2, 10.3) absorbs forces in the radial direction with respect to the axis of rotation (2), and wherein the slip rings (10.1, 10.2, 10.3) each form a bearing ring of a plain bearing in the uncoupled state.

7. Rotary feedthrough according to one of claims 1 to 6, **characterized in that** a torque detection device (11) is connected in particular to the stator (1), which is set up to detect an application of the torque and to send a control signal for switching off a drive unit (12) driving the rotor (3).

8. Rotary feedthrough according to one of claims 3 to 7, **characterized in that** the connecting element (7.3) comprises at least one metal bellows (15) and/or a torsion sleeve (16).

9. Rotary feedthrough according to claim 8, **characterized in that** the metal bellows (15) and/or the torsion sleeve (16) limits/limit the fluid channel (6).

10. Rotary feedthrough according to claim 8 and 9, **characterized in that** the metal bellows (15) and/or the torsion sleeve (16) is/are sealed against the hubs (13.1, 13.2).

11. Rotary feedthrough according to one of claims 3 to 7, **characterized in that** the connecting element (7.3) comprises at least one shear pin (19).

12. Rotary feedthrough according to one of the claims 3 to 11, **characterized in that** the two hubs (13.1, 13.2) are sealed against each other by means of at least one seal provided separately from the connecting element (7.3).

13. Rotary feedthrough according to one of claims 1 to 12, **characterized in that** the at least one bearing (4) is designed as a rolling bearing.

14. Rotary feedthrough according to one of claims 1 to 13, **characterized in that** the fluid connection (5.1, 5.2) comprises at least one hose or other flexible fluid line.

## Revendications

1. Traversée rotative avec un stator (1) et un rotor (3) qui peut tourner autour d'un axe de rotation (2) et qui est supporté dans ou sur le stator (1) au moyen d'au moins un palier (4) en tournant autour de l'axe de rotation (2) pendant le fonctionnement de la traversée rotative, dans laquelle
1.1 au moins un raccord de fluide (5.1, 5.2) est prévu au moins sur le stator (1) et au moins un canal de fluide (6) s'étend de façon étanche par rapport à l'environnement à travers le stator (1) et le rotor (3),
**caractérisée en ce que**
1.2 il est prévu dans le rotor (3) un accouplement de surcharge (7) acheminant un fluide, qui comprend deux moitiés d'accouplement (7.1) et (7.2) qui sont couplées de façon rigide en rotation lors de l'application d'un couple inférieur à un couple limite prédéterminé et qui sont découplées l'une de l'autre lors de l'application d'un couple égal ou supérieur au couple limite prédéterminé, l'accouplement de surcharge (7) isolant le canal de fluide (6) de l'environnement dans les états couplé et découplé des moitiés d'accouplement (7.1, 7.2) et le formant par sections, et les deux moitiés d'accouplement (7.1, 7.2) étant supportées avec possibilité de rotation l'une par rapport à l'autre autour de l'axe de rotation (2) dans l'état découplé.

2. Traversée rotative selon la revendication 1, **caractérisée en ce que** les moitiés d'accouplement (7.1, 7.2) comprennent chacune un moyeu (13.1, 13.2) et partagent le rotor (3) en deux parties de rotor (8.1, 8.2) coaxiales l'une de l'autre et chaque moitié d'accouplement (7.1, 7.2) est raccordée de façon solidaire en rotation avec l'une des parties de rotor (8.1, 8.2).

3. Traversée rotative selon la revendication 2, **caractérisée en ce que** les deux moitiés d'accouplement (7.1, 7.2) sont couplées l'une à l'autre, dans l'état couplé, par un élément de liaison (7.3), lequel élément de liaison (7.3) présente une liaison par correspondance de forme et/ou par friction et/ou par solidarité de matière avec les deux moitiés d'accouplement (7.1, 7.2).

4. Traversée rotative selon la revendication 3, **caractérisée en ce que** l'élément de liaison (7.3) est conçu pour interrompre l'accouplement entre les moitiés d'accouplement (7.1, 7.2), en particulier par cisaillement, quand le couple limite est exercé.

5. Traversée rotative selon la revendication 3 ou 4, **caractérisée en ce que** l'élément de liaison (7.3) comprend un dispositif de compensation (9) pour compenser les mouvements dans la direction de l'axe de rotation (2).

6. Traversée rotative selon l'une des revendications 1 à 5, **caractérisée en ce que** l'accouplement de surcharge (7) comprend au moins deux bagues glissantes (10.1, 10.2, 10.3) qui créent en particulier, dans l'état accouplé, une liaison sans jeu des moitiés d'accouplement (7.1, 7.2), une bague glissante (10.1) absorbant les forces dans la direction de l'axe de rotation (2) et au moins une bague glissante (10.2, 10.3) les forces dans le sens radial par rapport à l'axe de rotation (2) et les bagues glissantes (10.1, 10.2, 10.3) formant, dans l'état découplé, une bague de palier d'un palier à glissement.

7. Traversée rotative selon l'une des revendications 1 à 6, **caractérisée en ce qu'**un dispositif de détection du couple (11) est raccordé en particulier au stator (1) et conçu pour détecter l'application du couple et émettre un signal de commande pour arrêter une unité d'entraînement (12) qui entraîne le rotor (3).

8. Traversée rotative selon l'une des revendications 3 à 7, **caractérisée en ce que** l'élément de liaison (7.3) comprend au moins un soufflet métallique (15) et/ou un manchon de torsion (16).

9. Traversée rotative selon la revendication 8, **caractérisée en ce que** le soufflet métallique (15) et/ou le manchon de torsion (16) délimitent le canal de fluide (6).

10. Traversée rotative selon les revendications 8 et 9, **caractérisée en ce que** le soufflet métallique (15) et/ou le manchon de torsion (16) sont étanches par rapport aux moyeux (13.1, 13.2).

11. Traversée rotative selon l'une des revendications 3 à 7, **caractérisée en ce que** l'élément de liaison (7.3) comprend au moins une goupille de cisaillement (19).

12. Traversée rotative selon l'une des revendications 3 à 11, **caractérisée en ce que** les deux moyeux (13.1, 13.2) sont rendus étanches l'un par rapport à l'autre au moyen d'au moins un joint d'étanchéité prévu séparément de l'élément de liaison (7.3).

13. Traversée rotative selon l'une des revendications 1 à 12, **caractérisée en ce que** l'au moins un palier (4) est conformé comme un roulement.

14. Traversée rotative selon l'une des revendications 1 à 13, **caractérisée en ce que** le raccord de fluide (5.1, 5.2) comprend au moins une tubulure ou une autre conduite de fluide flexible.
